# EUROPEAN PATENT APPLICATION

(11) **EP 3 926 796 A1**
(43) Date of publication of application: **22.12.2021**
(21) Application number: 19933797.3
(22) Date of filing: 24.12.2019
(51) Int. Cl.: H02K 1/22

(54) **ROTOR STRUCTURE OF SELF-STARTING SYNCHRONOUS RELUCTANCE MOTOR AND MOTOR HAVING SAME**

(30) Priority: 19.06.2019 CN 201910533727
(71) Applicant: Gree Electric Appliances, Inc. of Zhuhai, Zhuhai, Guangdong 519070 (CN)
(72) Inventor: SHI, Jinfei, Zhuhai, Guangdong 519070 (CN); CHEN, Bin, Zhuhai, Guangdong 519070 (CN); LI, Xia, Zhuhai, Guangdong 519070 (CN); XIAO, Yong, Zhuhai, Guangdong 519070 (CN); YU, Qinhong, Zhuhai, Guangdong 519070 (CN)
(74) Representative: Noble, Nicholas
(86) International application number: PCT/CN2019/128070
(87) International publication number: WO 2020/253193

(57) **Abstract**

The present application provides a rotor structure of a self-starting synchronous reluctance motor and a motor having same. The rotor structure of a self-starting synchronous reluctance motor comprises a rotor core; starting recesses are provided on the outer edge of the rotor core; the starting recesses are located on axis q of the rotor core; a plurality of narrow slots is provided between the starting recesses and the shaft hole of the rotor core; filling slots are provided at both ends of each narrow slot to form a magnetic barrier layer; and the cross-sectional area of each starting recess at axis q of one magnetic pole is more than twice the cross-sectional area of one single filing slot. Such a configuration can increase the starting ability of the motor without affecting the overload capacity of the motor, and the specific area design of the starting recess can effectively improve the overload starting ability of the motor while ensuring the mechanical strength of the rotor structure and reducing magnetic leakage of the rotor.

## Description

### TECHNICAL FIELD

The present application relates to the field of motor device technology, and particularly to a rotor structure for a self-starting synchronous reluctance motor and a motor having the same. The application claims priority to Chinese Patent Application No. 201910533727.9, entitled "Rotor Structure for Self-Starting Synchronous Reluctance Motor and Motor Comprising same", filed on June 19, 2019.

### BACKGROUND

The self-starting synchronous reluctance motor combines the advantages of the asynchronous motor on the basis of the synchronous reluctance motor, and realizes the self-starting through the asynchronous torque generated by a rotor bar, without the use of a frequency converter to drive. Compared with the asynchronous motor, the motor has low loss and improved operation efficiency; and a constant speed operation can also be realized. Compared with the asynchronous starting permanent magnet synchronous motor, the permanent magnet material is not used, the cost is low, and there is no demagnetization problem of the permanent magnet.

The conventional synchronous reluctance motor requires a frequency converter to drive starting and control operation, the efficiency of the motor system is low during the operation, and the driving process is complicated. In the prior art, the patent with the patent publication number CN105122613A provides a rotor, the long arc-shaped magnetic flux obstructions in the outer rotor area are all filled with the aluminum or aluminum alloy, which results in low starting capacity of the motor.

### SUMMARY

The main purpose of this application is to provide a rotor structure for a self-starting synchronous reluctance motor and a motor having the same to solve the problem of low starting capacity of the motor in the prior art.

In order to achieve the above purpose, according to one aspect of the present application, a rotor structure for a self-starting synchronous reluctance motor is provided, including: a rotor core, an outer edge of the rotor core is provided with a starting slot, the starting slot is located in a q-axis direction of the rotor core, a plurality of slit slots are provided between the starting slot and a shaft hole of the rotor core, each of both ends of each slit slot is respectively provided with a filling slot to form a magnetic barrier layer, an area of a cross section of the starting slot in the *q*-axis direction of a magnetic pole is more than twice an area of a cross section of a single filling slot.

Furthermore, a central angle of the rotor core corresponding to the starting slot is θ1, with θ/3≤θ1≤θ/4, and θ is a pole arc of the rotor core.

Furthermore, a depth of the starting slot in a radial direction of the rotor core is equal to *r*, and a depth from a hole wall of the shaft hole of the rotor core to the outer edge of the rotor core is equal to *R*, with *R*/4≤*r*≤*R*/5.

Furthermore, a distance between an outer side wall of the starting slot and an outer circumferential surface of the rotor core is greater than a width of an air gap between a stator core and the rotor core.

Furthermore, the starting slot includes a plurality of independent unit slot structures.

Furthermore, a reinforcing rib is provided between the slit slot and the filling slot in a same magnetic barrier layer, a width of the reinforcing rib is equal to *L1,* with 0.8σ≤*L1≤*2σ, and σ is a width of an air gap between a stator core and the rotor core.

Furthermore, a distance between adjacent magnetic barrier layers is equal to *L2,* with *L2≥1.8h,* and *h* is a width of a magnetic barrier layer with a smaller width in two adjacent magnetic barrier layers.

Furthermore, the filling slot is a closed slot, and a distance from an end portion of the filling slot to the outer edge of the rotor core is greater than a width of an air gap formed between a stator core and the rotor core.

Furthermore, in each magnetic barrier layer, a ratio of an area of a cross section of the filling slot to an area of a cross section of the magnetic barrier layer is greater than 0.4.

Furthermore, in each magnetic barrier layer, a ratio of an area of a cross section of the filling slot to an area of a cross section of the magnetic barrier layer is in a range of 0.4 to 0.6.

Furthermore, an area of a cross section of the filling slot is arranged to gradually increase in the d-axis direction of the rotor core, and the filling slot extends towards the shaft hole of the rotor core.

Furthermore, the starting slot and the filling slot are filled with a same material and short-circuited with conductive end rings at both ends of the rotor core to form a squirrel cage.

Furthermore, the slit slot is in communication with the filling slot in a same magnetic barrier layer, and a difference between a width of the slit groove and a width of the filling groove is less than or equal to 0.1.

According to another aspect of the present application, a motor is provided, including the above-mentioned rotor structure for the self-starting synchronous reluctance motor.

By applying the technical solution of the present application, the area of the cross section of the starting slot in the q-axis direction of a magnetic pole is set to be more than twice the area of the cross section of a single filling slot. Such arrangement can increase the starting capacity of the motor without affecting the overload capacity of the motor. The specific design of the area of the starting slot can effectively improve the overload starting capacity of the motor while ensuring the mechanical strength of the rotor structure and reducing the magnetic leakage of the rotor.

### BRIEF DESCRIPTION OF THE DRAWINGS

The accompanying drawings of the specification forming a part of the present application are utilized to provide further understanding of the present application, and the exemplary embodiments and descriptions of the present application are utilized to explain the application, and do not constitute an improper limitation to the present application. In the accompanying drawings:
FIG. 1 is a schematic structure diagram of a rotor structure for a self-starting synchronous reluctance motor according to an embodiment I of the present application.
FIG. 2 is a schematic structure diagram of a rotor structure for a self-starting synchronous reluctance motor according to an embodiment II of the present application.
FIG. 3 is a schematic structure diagram of a conductive end ring of a rotor structure for a self-starting synchronous reluctance motor according to an embodiment of the present application.
FIG. 4 shows a comparison diagram of a rotation speed of a motor in the present application and a rotation speed of a motor in the prior art.

The above drawings include the following reference signs:
10, rotor core;
20, starting slot;
30, slit slot;
40, filling slot;
50, conductive end ring.

### DETAILED DESCRIPTION

It should be noted that the embodiments in the present application and the features in the embodiments can be combined with each other if there is no conflict. Hereinafter, the present application will be described in detail with reference to the accompanying drawings and in conjunction with the embodiments.

It should be noted that the terms used here are merely for describing specific embodiments, and are not intended to limit the exemplary embodiments according to the present application. As used herein, unless the context clearly indicates otherwise, the singular form is also intended to include the plural form. In addition, it should also be understood that when the terms "comprising" and/or "including" are used in this specification, they indicate that there exist features, steps, operations, devices, components, and/or combinations thereof.

It should be noted that the terms "first" and "second", etc., in the description, claims and drawings of the present application are utilized to distinguish similar objects, and are not definitely utilized to describe a specific sequence or order. It should be understood that the terms used in this way can be interchanged under appropriate circumstances, so that the embodiments of the present invention described herein can be implemented in an order other than those illustrated or described herein. In addition, the terms "including" and "having" and any transformations thereof are intended to cover non-exclusive inclusions. For example, a process, a method, a system, a product, or a device that includes a series of steps or units is not definitely limited to those clearly listed steps or units, but may include other steps or units that are not clearly listed or are inherent to these processes, methods, products, or devices.

For ease of description, spatial relative terms can be used here, such as "above", "over", "on an upper surface", "on", etc., to describe a spatial position relationship between one device or feature and other devices or features as shown in the figures. It should be understood that the spatial relative terms are intended to include different orientations in use or operation other than the orientation of the device described in the figures. For example, if the device in the figures is inverted, then the device described as "above the other device or structure" or "over the other device or structure" will then be positioned as "below the other device or structure" or "under other devices or structures". Thus, the exemplary term "above" can include both orientations "above" and "below". The device can also be positioned in other different manners (such as being rotated by 90 degrees or in other orientations), and the relative description of the space used here will be explained accordingly.

Now, exemplary embodiments of the present invention will be described in more detail with reference to the accompanying drawings. However, these exemplary embodiments can be implemented in a variety of different forms, and should not be construed as being limited to the embodiments set forth herein. It should be understood that these embodiments are provided to make the disclosure of this application thorough and complete, and to fully convey the concept of these exemplary embodiments to those of ordinary skill in the art. In the drawings, for clarity, the thicknesses of the layers and regions may be increased, and the same reference numerals are utilized to denote the same devices, so their descriptions will be omitted.

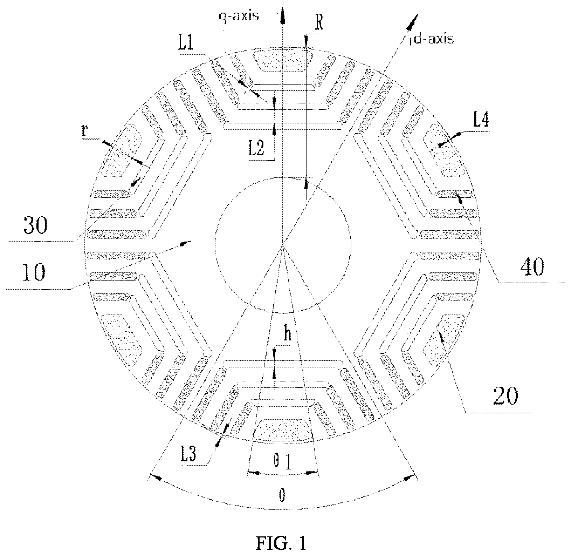

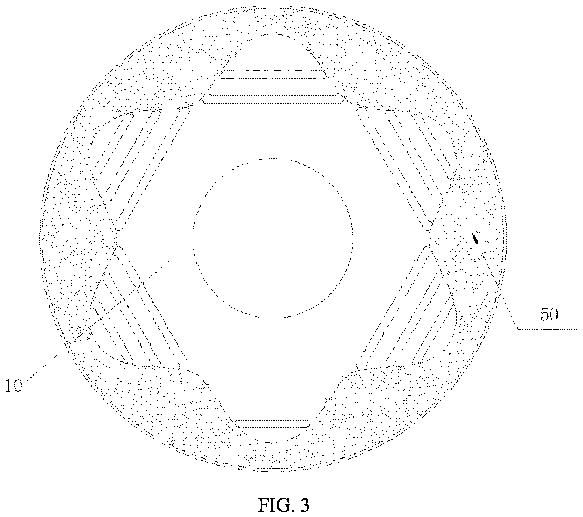

With reference to FIGS. 1 to 4, according to an embodiment of the present application, a rotor structure for a self-starting synchronous reluctance motor is provided.

Specifically, the rotor structure includes a rotor core 10. A starting slot 20 is provided at an outer edge of the rotor core 10; the starting slot 20 is located in the q-axis direction of the rotor core 10; and a plurality of slit slots 30 are provided between the starting slot 20 and a shaft hole of the rotor core 10. Each of both ends of each slit slot 30 is respectively provided with a filling slot 40 to form a magnetic barrier layer. An area of a cross section of the starting slot 20 in the q-axis direction of a magnetic pole is more than twice an area of a cross section of a single filling slot 40.

In this embodiment, the area of the cross section of the starting slot 20 in the q-axis direction of a magnetic pole is set to be more than twice the area of the cross section of the single filling slot 40. Such arrangement can increase the starting capacity of the motor without affecting the overload capacity of the motor. The specific design of the area of the starting slot can effectively improve the overload starting capacity of the motor while ensuring the mechanical strength of the rotor structure and reducing the magnetic leakage of the rotor.

As shown in FIG. 1, a central angle of the rotor core 10 corresponding to the starting slot 20 is θ1, with θ/3≤θ1≤θ/4, and θ is a pole arc of the rotor core 10. A depth of the starting slot 20 in the radial direction of the rotor core 10 is equal to *r*; and a depth from a hole wall of the shaft hole of the rotor core 10 to the outer edge of the rotor core 10 is equal to *R*, with *R*/4≤*r*≤*R*/5. A distance between an outer side wall of the starting slot 20 and the outer circumferential surface of the rotor core 10 is greater than the width of the air gap between the stator core and the rotor core 10. Such arrangement can increase the torque of the motor, thereby improving the starting capacity of the motor.

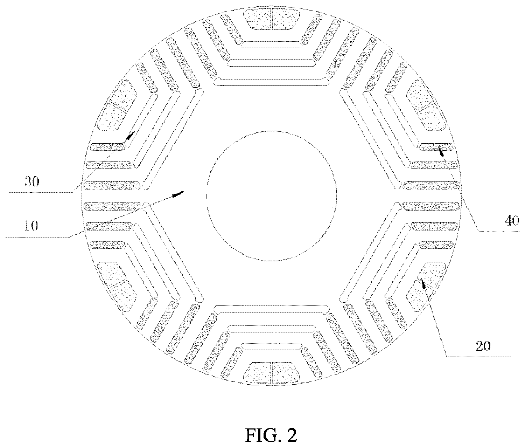

The starting slot 20 includes a plurality of independent unit slot structures. As shown in FIG. 2, the starting slot 20 includes two independently arranged unit slot structures; a reinforcing rib is formed between the unit slots, so that the arrangement can improve the strength of the rotor structure.

Further, a reinforcing rib is provided between the slit slot 30 and the filling slot 40 in the same magnetic barrier layer. The width of the reinforcing rib is equal to *L1,* with 0.8σ≤*L1*≤2σ, and σ is the width of the air gap between the stator core and the rotor core 10. A distance between adjacent magnetic barrier layers is equal to *L2,* with *L2≥*1.8*h,* and *h* is a width of a magnetic barrier layer with a smaller width in the two adjacent magnetic barrier layers. Such arrangement can also increase the strength of the rotor structure, and improve the stability and reliability of the rotor structure.

The filling slot 40 is a closed slot; and a distance from an end portion of the filling slot 40 to the outer edge of the rotor core 10 is greater than the width of the air gap formed between the stator core and the rotor core 10. In each magnetic barrier layer, a ratio of the area of the cross section of the filling slot 40 to the area of the cross section of the magnetic barrier layer is greater than 0.4. Preferably, in each magnetic barrier layer, the ratio of the area of the cross section of the filling slot 40 to the area of the cross section of the magnetic barrier layer is in a range of 0.4 to 0.6. Such arrangement can improve the starting capacity of the motor.

In this embodiment, in order to further improve the starting capacity of the motor, the area of the cross section of the filling slot 40 is arranged to gradually increase in a direction approaching the *d*-axis of the rotor core 10; and a length of the filling slot 40 extending towards the shaft hole of the rotor core 10 is greater. The starting slot 20 and the filling slot 40 are filled with the same material and short-circuited with the conductive end rings at both ends of the rotor core 10 to form a squirrel cage.

The rotor structure in the above embodiment can also be applied to the field of motor device technology, that is, according to another aspect of the present application, a motor is provided. The motor includes the above-mentioned rotor structure for the self-starting synchronous reluctance motor.

Specifically, in the rotor structure for the self-starting synchronous reluctance motor of the present application, by arranging a special starting slot on the rotor, the asynchronous torque of the motor in the starting phase is increased, and the starting capacity of the motor is enhanced. The rotor of the motor consists of a rotor punching sheet with a specific structure and conductive end rings 50 at both ends of the rotor core. The rotor punching sheet is provided with a plurality of slit slots and filling slots; and there are evenly distributed starting slots along the circumference of the rotor. The rotor punching sheet is provided with a shaft hole matched with the rotating shaft. The slit slot and the filling slot are smoothly connected to form a rotor magnetic barrier layer; and the filling slot and the slit slot in each magnetic barrier layer need to be separated.

The width *L1* of the interval between the filling slot and the slit slot satisfies 0.8σ≤*L1*≤2σ, and σ is the width of the air gap between an inner diameter of the stator and an outer diameter of the rotor. At the same time, a difference value between the width of the filling slot and the width of the slit slot in each magnetic barrier layer is within 10%. On the one hand, it can ensure the mechanical strength of the rotor structure and reduce the magnetic leakage between the filling slot and the slit slot. On the other hand, the control of the width of the interval between the filling slot and the slit slot can make the magnetic circuit of the rotor smooth and reduce the magnetic resistance of the magnetic circuit of the rotor. In the magnetic barrier layers, a distance *L2* between adjacent magnetic barrier layers should be greater than *1.8h,* and *h* is a width of a magnetic barrier layer with a smaller width in the two adjacent magnetic barrier layers. On the one hand, it can reduce the processing difficulty of the rotor; on the other hand, it can ensure the uniformity of the magnetic density distribution of the rotor and reduce the saturation of the magnetic density of the rotor.

The filling slot is a closed slot, and is filled with the conductive and non-magnetic material. Considering the impact of the strength and magnetic leakage of the rotor structure, a width of an interval *L3* between the filling slot and the outer edge of the rotor should be greater than σ, σ is the width of the air gap between the inner diameter of the stator and the outer diameter of the rotor. In order to ensure that the rotor has the starting capacity of self-starting, an area of the filling slots should account for more than 40% of the area of the magnetic barrier. More preferably, a ratio of the area of the filling slots to the area of the magnetic barrier is in a range of 40% to 60%. With the transition from the *q*-axis direction to the *d*-axis direction, the longer the filling slot extends into the rotor, the larger the area of the filling slot. A larger area of filling slot can increase the starting torque of the motor and contribute to enhancing the self-starting capacity of the motor.

The starting slots are evenly distributed along the circumference of the rotor in the q-axis direction of the rotor. The area of the starting slot needs to be twice or more the maximum area of the filling slot. The arrangement of a special starting slot can improve the asynchronous rotation of the self-starting synchronous reluctance motor during the starting phase, and enhance the starting capacity of the motor. A span angle θ1 of the starting slot on the circumference of the rotor should satisfy θ/3≤θ1≤θ/4, θ is the pole arc of the rotor. Too small span angle cannot meet the area requirement of the starting slot, and a too large span angle may cause the structure of the rotor in the q-axis direction to be fragile and easily deformed. The radial depth *r* of the starting slot should satisfy R/4≤*r*≤*R*/5, and *R* is the depth of the rotor. At the same time, the distance *L4* between the starting slot and the outer edge of the rotor should be greater than σ. On the one hand, the starting slot can reach the required area under a certain span angle of the starting slot and sufficient structure strength of the rotor. On the other hand, if the starting slot is too deep, the distribution of the magnetic barrier layers of the rotor may be affected, and the starting capacity of the motor to pull in synchronization may be reduced. The starting slot is filled with the same material as the filling slot, and the filling slot and the starting slot are self-short-circuited through the conductive end rings to form the squirrel cage. The material of the conductive end ring is the same as the material in the filling slot.

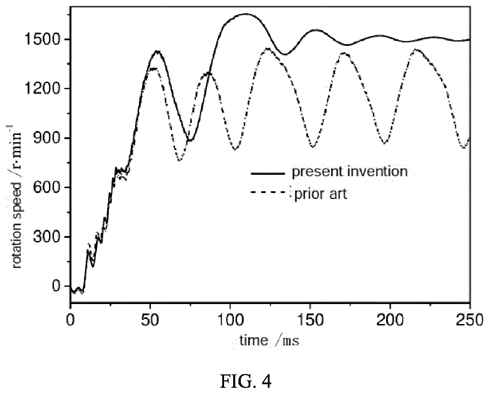

FIG. 4 shows a comparison diagram of a rotation speed of a motor in the present application and a rotation speed of a motor in the prior art. The motor of the present application can successfully start the motor on load, and accordingly enhance the self-starting capacity of the motor. The shape of the starting slot is not limited to rectangular or other shapes, and the number of blocks is not limited to two or more.

In addition to the above, it should be noted that the "one embodiment", "another embodiment", "embodiment", etc., referred to in this specification indicate that the specific features, structures, or characteristics described in conjunction with the embodiments are included in at least one embodiment described generally in this application. The same expression in multiple places in the specification does not definitely refer to the same embodiment. Furthermore, when a specific feature, structure, or characteristic is described in conjunction with any embodiment, it is claimed that the combination of other embodiments to realize such a feature, structure, or characteristic also falls within the scope of the present application.

In the above-mentioned embodiments, the description of each embodiment has its own emphasis. For parts that are not described in detail in an embodiment, reference may be made to related descriptions in other embodiments.

The foregoing descriptions are merely preferred embodiments of the invention, and are not intended to limit the application. For those skilled in the art, the application can have various modifications and transformations. Any modification, equivalent replacement, improvement, etc., made within the spirit and principle of this application shall be included in the protection scope of the present application.

## Claims

1. A rotor structure for a self-starting synchronous reluctance motor, **characterized by** comprising:
a rotor core (10), wherein an outer edge of the rotor core (10) is provided with a starting slot (20), the starting slot (20) is located in a *q*-axis direction of the rotor core (10), a plurality of slit slots (30) are provided between the starting slot (20) and a shaft hole of the rotor core (10), each of both ends of each slit slot (30) is respectively provided with a filling slot (40) to form a magnetic barrier layer, an area of a cross section of the starting slot (20) in the *q*-axis direction of a magnetic pole is more than twice an area of a cross section of a single filling slot (40).

2. The rotor structure for the self-starting synchronous reluctance motor according to claim 1, wherein a central angle of the rotor core (10) corresponding to the starting slot (20) is θ1, with θ/3≤θ1≤θ/4, and θ is a pole arc of the rotor core (10).

3. The rotor structure for the self-starting synchronous reluctance motor according to claim 1, wherein a depth of the starting slot (20) in a radial direction of the rotor core (10) is equal to *r*, and a depth from a hole wall of the shaft hole of the rotor core (10) to the outer edge of the rotor core (10) is equal to *R*, with *R*/4≤*r*≤*R*/5.

4. The rotor structure for the self-starting synchronous reluctance motor according to claim 1, wherein a distance between an outer side wall of the starting slot (20) and an outer circumferential surface of the rotor core (10) is greater than a width of an air gap between a stator core and the rotor core (10).

5. The rotor structure for the self-starting synchronous reluctance motor according to claim 1, wherein the starting slot (20) comprises a plurality of independent unit slot structures.

6. The rotor structure for the self-starting synchronous reluctance motor according to claim 1, wherein a reinforcing rib is provided between the slit slot (30) and the filling slot (40) in a same magnetic barrier layer, a width of the reinforcing rib is equal to *L1,* with 0.8σ≤*L1*≤2σ, and σ is a width of an air gap between a stator core and the rotor core (10).

7. The rotor structure for the self-starting synchronous reluctance motor according to claim 1, wherein a distance between adjacent magnetic barrier layers is equal to *L2,* with *L2*≥1.8*h,* and *h* is a width of a magnetic barrier layer with a smaller width in two adjacent magnetic barrier layers.

8. The rotor structure for the self-starting synchronous reluctance motor according to claim 1, wherein the filling slot (40) is a closed slot, and a distance from an end portion of the filling slot (40) to the outer edge of the rotor core (10) is greater than a width of an air gap formed between a stator core and the rotor core (10).

9. The rotor structure for the self-starting synchronous reluctance motor according to claim 1, wherein in each magnetic barrier layer, a ratio of an area of a cross section of the filling slot (40) to an area of a cross section of the magnetic barrier layer is greater than 0.4.

10. The rotor structure for the self-starting synchronous reluctance motor according to claim 1, wherein in each magnetic barrier layer, a ratio of an area of a cross section of the filling slot (40) to an area of a cross section of the magnetic barrier layer is in a range of 0.4 to 0.6.

11. The rotor structure for the self-starting synchronous reluctance motor according to claim 1, wherein, an area of a cross section of the filling slot (40) is arranged to gradually increase in a direction approaching the *d*-axis of the rotor core (10), and a length of the filling slot (40) extending towards the shaft hole of the rotor core (10) is greater.

12. The rotor structure for the self-starting synchronous reluctance motor according to claim 1, wherein the starting slot (20) and the filling slot (40) are filled with a same material and short-circuited with conductive end rings at both ends of the rotor core (10) to form a squirrel cage.

13. The rotor structure for the self-starting synchronous reluctance motor according to claim 1, wherein, the slit slot (30) is in communication with the filling slot (40) in a same magnetic barrier layer, and a difference between a width of the slit groove (30) and a width of the filling groove (40) is less than or equal to 0.1.

14. A motor, comprising the rotor structure for the self-starting synchronous reluctance motor of any one of claims 1 to 13.
